# EUROPÄISCHE PATENTSCHRIFT

(11) **EP 1 775 325 B1**
(45) Veröffentlichungstag und Bekanntmachung des Hinweises auf die Patenterteilung: **03.12.2008**
(21) Anmeldenummer: 06020713.1
(22) Anmeldetag: 02.10.2006
(51) Int. Cl.: C09D 7/00, C08L 75/08, C08G 18/48

(54) **Hydrophobe, wasserunlösliche Polyurethanverdickungsmittel in Granulat- oder Pulverform und ihre Verwendung zur Verdickung wässriger Systeme**
Hydrophobic, water insoluble polyurethane thickeners in pellet- or powderform and their use in thickening aqueous systems
Epaississants polyuréthane hydrophobiques insolubles dans l'eau sous forme de granules ou poudre et leur utilisation pour épaissir des systèmes aqueux

(30) Priorität: 12.10.2005 DE 102005048866
(43) Veröffentlichungstag der Anmeldung: 18.04.2007
(73) Patentinhaber: Evonik Goldschmidt GmbH, 45127 Essen (DE)
(72) Erfinder: Bauer, Sandra, Midlothian Virginia 23113 (US); Link, Günter, 38855 Wernigerode (DE)

(56) Entgegenhaltungen:
- EP-A- 1 241 211
- DE-A1- 10 201 344
- US-A- 5 281 654

## Beschreibung

Die Erfindung betrifft neuartige pulverförmige, emulgatorfreie, hydrophobe Verdickungsmittelzubereitungen auf Polyurethanbasis, die sich besonders gut in Farben und Lacken auf wässriger Basis einarbeiten lassen und ihre Verwendung als rheologische Additive zur Verdickung vorzugsweise wässriger Systeme.

Es ist eine Vielzahl von assoziativen Verdickern auf Polyurethanbasis für wässrige Systeme bekannt und beschrieben. US-4,499,892 beschreibt zum Beispiel die Herstellung und die Verwendung von Polyurethanverdickerwirkstoffen für wässrige Formulierungen. Folgende weitere Patentschriften seien hier beispielhaft erwähnt: DE-A-14 11 243, DE-A-36 30 319, DE-A-196 44 933, EP-A-0 031 777, EP-A-0 307 775, EP-A-0 495 373, US-A-4 079 028, US-A-4 499 233, US-A-4 155 892 oder US-A-5 023 309.

DE-A-101 11 791 beschreibt den Aufbau von Verdickungsmitteln auf Polyurethanbasis in allgemeiner Form. Solche Polyurethanverdicker besitzen demzufolge Urethangruppen und gleichzeitig hydrophile Segmente in einer Menge von mindestens 50 Gew.-% und hydrophobe Segmente in einer Menge von höchstens 10 Gew.-%. Unter hydrophilen Segmenten sind hierbei insbesondere hochmolekulare Polyetherketten, die insbesondere aus Ethylenoxidpolymeren bestehen, zu verstehen. Unter hydrophoben Segmenten sind insbesondere Kohlenwasserstoffketten mit mindestens sechs Kohlenstoffatomen zu verstehen. Der spezifische Molekülaufbau, die Balance zwischen hydrophilen und hydrophoben Segmenten, sowie das Molgewicht bestimmen das finale rheologische Verhalten im Anwendungsmedium.

Polyurethanverdicker der genannten Art und deren Zubereitungen eignen sich als Hilfsmittel für die Einstellung von rheologischen Eigenschaften von wässrigen Systemen wie Auto- und Industrielacken, Putz- und Anstrichfarben, Druck- und Textilfarben, Pigmentpasten, pharmazeutischen, kosmetischen Zubereitungen. Verdickungsmittel auf Polyurethanbasis eignen sich prinzipiell zur assoziativen Verknüpfung aller sphärischer Grenzflächen, insbesondere in wässrigen Emulsions- und Dispersionssystemen.

Der Einsatz von Polyurethanverdickern erfordert zwingend eine ideale Verteilung der assoziativ wirksamen Verbindungen. So erfordern wässrige Polyurethanverdickungsmittelzubereitungen nach dem Stand der Technik zusätzliche, meist nichtionogene Emulgatoren (DE-A-196 00 467). EP-A 0 618 243 beschreibt weiterhin die Verwendung von Acetylendiolderivaten als Formulierungsbestandteile. Ebenso ist die Verwendung von flüchtigen oder nichtflüchtigen organischen Lösemitteln (DE-A-196 44 933) bekannt. Allen diesen zusätzlichen Formulierungsbestandteilen ist gemeinsam, dass sie die Lieferviskosität reduzieren und eine Verteilung des Polyurethanwirkstoffs im Anwendungsmedium erleichtern sollen. Die handelsüblichen Polyurethanverdickerformulierungen besitzen dadurch, in der Regel einen Wirkstoffanteil von 10 bis 50 %.

Obwohl die bekannten Polyurethanverdicker breite Anwendung finden, weisen sie wesentliche Nachteile auf. Die meisten kommerziellen Produkte werden als wässrige Zubereitungen mit einem reduzierten Wirkstoffanteil angeboten. Neben einer Reihe kommerzieller Nachteile wie Verpackungs-, Lager- und Transportkosten, besitzen solche dem Stand der Technik entsprechenden Produkte gleichzeitig eine Reihe technischer Nachteile.

Werden Polyurethanverdicker zur nachträglichen Viskositätskorrektur bereits produzierter Dispersionsfarben benötigt, wird die angelieferte Form (z.B. 50 %) durch Verdünnen (in der Regel 1 : 9) auf eine Konzentration von 5 % gebracht. Gegenüber dem eigentlichen Wirkstoff erhöht sich der Raumbedarf zur Lagerung eines solchen Additivs um das 20fache.

Werden Emulgatoren zur Verflüssigung der Lieferformulierung zugesetzt, kann durch diese Tenside während der Produktion der Lackfarben eine Schaumstabilisierung hervorgerufen werden. Weiterhin wird in unerwünschter Weise die Wasser- und Witterungsbeständigkeit von Beschichtungssystemen sowie, im Falle von Bautenfarben, deren Scheuerbeständigkeit herabgesetzt.

Werden wasserlösliche oder wassermischbare organische Lösemittel, wie beispielsweise Alkohole oder Glykolderivate, zur Reduzierung der Eigenviskosität der wässrigen Polyurethanverdickungsmittelzubereitung genutzt, resultiert der entscheidende Nachteil des Eintrags von unerwünschtem Lösemittel, was dem Gedanken der VOC-Reduktion mit ihren Gefahren für die Umwelt zuwiderläuft.

Es ist bekannt, dass die geschilderten Probleme verstärkt bei strukturviskosen, verzweigten Polyurethanverdickern auftreten. In lediglich verlaufaktiv wirksamen Urethanen, die zusätzlich ein niedriges Molgewicht besitzen, stellt sich die aufgezeigte Problematik naturgemäß nicht.

Um das aufgezeigte Bündel von Problemen zu umgehen, wurden bereits mehrfach Versuche unternommen, reine Polyurethanverdickerwirkstoffe einzusetzen oder verarbeitungsgerecht zu modifizieren. Reine Polyurethanverdickerwirkstoffe mit hoher Verdickungswirkung sind jedoch feste bis wachsartige Verbindungen mit Schmelzpunkten zwischen 25 bis 60 °C. Gerade funktionsgerechte, wasserlösliche Wirkstoffe besitzen Lagerprobleme, da hier die Polymerpartikel schon bei geringfügig erhöhten Temperaturen verkleben. Weiterhin ist der in Wasser zu vollziehende Löse- und Dosiervorgang selbst schwierig zu steuern. Werden zu große Mengen zu schnell und mit zu geringer Scherung eingebracht, besteht die Gefahr des Verklumpens und Vergelens.

Die EP-A-0 773 263 beschreibt an sich bekannte Polyurethanwirkstoffe, die mit oberflächenaktiven (anionischen, kationischen und nichtionogenen) Mitteln kombiniert werden. Der Anteil an Urethanwirkstoff beträgt hier 50 bis 85 %.

Ebenso nutzt DE-A-101 11 791 an sich bekannte Polyurethanwirkstoffe, die mit wasserlöslichen bzw. wasserunlöslichen Stoffen kombiniert werden. Nach Entfernen vom Lösemittel resultieren feste Formulierungen. Die Patentbeispiele besitzen Wirkstoffgehalte von nur 11 bis 65 %.

Die Eigenschaften bisher bekannter pulverförmiger, zu 100 % aus Polyurethanverdickerwirkstoff bestehenden Produkte sind daher nicht optimal. Sie lassen sich häufig nur schwer in Lacke bzw. Farben einarbeiten und führen so zur Klumpenbildung in den Lackmischungen. Darüber hinaus ist ihre Wirkung oft nicht ausreichend. Auch kann die Herstellung fester Verdickungsmittel schwierig sein, da deren Inhaltsstoffe meist bei Raumtemperatur wachsartig sind, so dass sich keine riesel- und lagerfähigen Pulver herstellen lassen.

Die oben genannten Beispiele zeigen, dass ein Bedarf an neuen pulverförmigen, emulgatorfreien Polyurethanverdickungsmitteln besteht. Der vorliegenden Erfindung lag somit die Aufgabe zugrunde, neue emulgator- und lösemittelfreie Polyurethanverdicker zur Verfügung zu stellen. Die pulverförmigen oder granulierten Produkte sollen riesel- und lagerfähig sein und sich leicht durch Rühren in allen Herstellungsphasen in wässrige Systeme einarbeiten lassen. Dies gilt auch für eventuell im Nachhinein anfallende Nachdosierungen in bereits fertig formulierte Lacke und/oder Farben.

Die vorgenannte Aufgabe wird überraschenderweise gelöst durch pulverförmige Verdickungsmittelzubereitung, bestehend aus mindestens einen in Wasser löslichen Polyurethanverdickerwirkstoff und mindestens einen in Wasser unlöslichen bzw. wenig löslichen Polyurethanverdickerwirkstoff.

Ein Gegenstand der Erfindung sind daher pulverförmige Verdickungsmittelzubereitungen, enthaltend
a) mindestens einen in Wasser löslichen Polyurethanverdickerwirkstoff und
b) mindestens einen in Wasser unlöslichen bzw. wenig löslichen Polyurethanverdickerwirkstoff.

Ein weiterer Gegenstand der Erfindung sind alle Kombinationen der wasserlöslichen Polyurethanwirkstoffe nach a) mit wasserunlöslichen Polyurethanen nach b). Bevorzugt sind Kombinationen mit 20 bis 90 Gew.-% an b) und entsprechend 80 bis 10 Gew.-% an a).

In Wasser lösliche Polyurethanverdickerwirkstoffe nach a) sind bekannt und werden seit vielen Jahren erfolgreich als Verdickungsmittel allein oder in den oben erwähnten Formulierungen für die bekannte Anwendung propagiert und eingesetzt.

In Wasser lösliche Polyurethanverdickerwirkstoffe nach a) sind gekennzeichnet durch eine Wasserlöslichkeit von > 10 g/l. Besonders bevorzugte Beispiele für in Wasser lösliche Polyurethanverdickerwirkstoffe nach a) sind solche Polyurethanverdickerwirkstoffe die hydrophile Segmente zur Löslichkeit aufweisen.

Unter hydrophilen Segmenten sind hierbei insbesondere hochmolekulare Polyetherketten, die insbesondere aus Ethylenoxidpolymeren bestehen, zu verstehen. Unter hydrophoben Segmenten sind insbesondere Kohlenwasserstoffketten mit mindestens sechs Kohlenstoffatomen zu verstehen.

In Wasser unlösliche bzw. wenig lösliche Polyurethanverdickerwirkstoffe nach b) sind Polyurethanverdickerwirkstoffe mit einer Löslichkeit in Wasser von < 10 g/l. Bevorzugt ist ein Löslichkeit in Wasser von < 5 g/l. Obwohl die erfindungsgemäß definierten Polyurethane selbst praktisch keine oder nur geringe Löslichkeit besitzen, ist das Polymer in der Lage, Wasser in einer bestimmten Größenordnung aufzunehmen, d.h. die Produkte können wasserquellbar sein.

Besonders bevorzugte Beispiele für in Wasser unlösliche bzw. wenig lösliche Polyurethanverdickerwirkstoffe sind solche Polyurethanverdickerwirkstoffe, worin
(A) mindestens trifunktionelle aliphatische und/oder aromatische Isocyanatoligomerisate nach an sich bekannten Verfahren umgesetzt werden mit
(B) 90,0 bis 99,8 Val-% einem oder mehreren Polyethern der Struktur RO(SO)_{w}(BO)ₓ(PO)_{y}(EO)_{z}-H und
(C) 0,2 bis 10,0 Val-% mindestens einer der Verbindungen
   (a) Polyethern der Struktur HO(SO)_{w'}(BO)_{x'}(PO)_{y},(EO)_{z},-H;
   (b) Polyetherpolydimethylsiloxandiole der Struktur H(SO)_{w'}(BO)_{x'}(PO)_{y'}(EO)_{z'}-Z-PDMS-Z-(EO)_{z'}(PO)_{y'}(BO)_{x'} (SO)_{w'}-H;
   (c) Polyesterpolydimethylsiloxandiole der Struktur H- (OC₅H₁₀CO-)_{y'}-Z-PDMS-Z- (CO-C₅H₁₀O-)_{y},-H
   (d) Polydimethylsiloxandiolen der Struktur H-Z-PDMS-Z-H;
   (e) Polydimethylsiloxandiaminen der Struktur R'NH-Y-PDMS-Y-HNR';
   (f) Polyetherdiaminen der Struktur R'HN-(PO)_{y'} (EO)_{z'} -X-(EO)_{z'} (PO)_{y'}-NHR' sind,
   worin bedeuten,
   - R: ein gegebenenfalls substituierter oder funktionalisierter Kohlenwasserstoffrest mit 1 bis 50 Kohlenstoffatomen,
   - R': ein gegebenenfalls substituierter oder funktionaliserter Kohlenwasserstoffrest mit 1 bis 8 Kohlenstoffatomen,
   SO divalenter Rest des Styrenoxids,
   BO divalenter Rest des Butylenoxids,
   PO divalenter Rest des Propylenoxids,
   EO divalenter Rest des Ethylenoxids,
   PDMS divalenter Rest des Polydimethylsiloxans,
   - w: 0 bis 5,
   - x: 0 bis 5,
   - y: 0 bis 20,
   - z: 50 bis 200,

   - w': 0 bis 5,
   - x': 0 bis 5,
   - y': 0 bis 10,
   - z': 1 bis 49,

   - Z: -CₙH₂ₙO- oder -CH₂-CH₂-O-CₙH₂ₙO-, mit n = 2 bis 12,
   - X: -CₙH₂ₙ- oder -C₆H₄-, mit n = 2 bis 12,
   - Y: -CₘH₂ₘ, mit m = 1 bis 8.

Beispiele für aliphatische Triisocyanate sind:
Vestanat^{®} T 1890-100 (Fa. Degussa), Desmodur^{®} N 100 (Fa. Bayer); Desmodur^{®} N 3200; Desmodur^{®} N 3300; Desmodur^{®} N 3600 und Desmodur^{®} 4470 SN.

Beispiele für aromatische Isocyanate sind:
Desmodur^{®} IL; Desmodur^{®} L; Suprasec^{®} DNR (Fa. Huntsman).

Bevorzugt ist die Verwendung aliphatischer Strukturen, insbesondere die Verwendung von Hexamethylendiisocyanat(HDI)-Oligomeren, wie beispielsweise Desmodur^{®} N.

Diesen mindestens trifunktionellen Isocyanaten können zur Regelung der Viskosität geringe Mengen, 0 bis 20 Val-%, an entsprechenden Diisocyanaten und/oder Monoisocyanaten zugesetzt werden.

Die Isocyantkomponente (A) wird zunächst mit 90 bis 99,8 Val-% der Monoolkomponenten (B) der Struktur RO(SO)_{w}(BO)ₓ(PO)_{y}(EO)_{z}-H nach an sich bekannten Verfahren umgesetzt.

Von wesentlicher Bedeutung für die Eigenschaften der Verbindungen sind die Reste R sowie die Zahlenwerte der Indices w, x, y und z.

R ist ein gegebenenfalls auch substituierter Kohlenwasserstoffrest mit 1 bis 50 Kohlenstoffatomen. Bevorzugt sind Reste mit 12 bis 22 Kohlenstoffatomen, insbesondere bevorzugt sind C₁₈-Derivate. Im Falle kürzerer Kohlenwasserstoffreste fungieren die Alkylenoxideinheiten, Styrenoxid (SO) oder Butylenoxid (BO) als Hydrophobsegmente.

Die Summe der Ethylenoxidreste (z) ist 50 bis 200, vorzugsweise 100 bis 200, insbesondere bevorzugt 110 bis 150.

Die Summe der Propylenoxidreste (y) beträgt 0 bis 20, bevorzugt 0 bis 10, insbesondere bevorzugt 0 bis 5.
Die Summe der Butylenoxidreste (x) ist 0 bis 5, bevorzugt 0 bis 3, insbesondere bevorzugt 0 bis 1.
Die Summe der Styrenoxidreste (w) ist 0 bis 5, bevorzugt 0 bis 3, insbesondere bevorzugt 1.

Es ist dem Fachmann geläufig, dass diese Indices statistische Mittelwerte darstellen und alle Verbindungen in Form eines Gemisches einer im Wesentlichen durch statistische Gesetze geregelten Verteilung vorliegen.

Auch können Gemische verschiedener Monoolkomponenten eingesetzt werden. Diese Polyethermonoole werden gleichsam nach dem Stand der Technik entsprechenden Verfahren durch Anlagerung von aromatischen und/oder aliphatischen Oxiranverbindungen an monofunktionelle Alkohole hergestellt. Die Anlagerung der verschiedenen Alkylenoxide kann dabei blockweise oder statistisch erfolgen; eine blockweise Anordnung ist bevorzugt.

Zeitgleich, oder vorzugsweise in einer zweiten Reaktionsstufe, werden dem Reaktionsgemisch 0,2 bis 10,0 Val-% mindestens eine der Diol- oder Diaminkomponenten (C) zugeführt.

(C)(a): Bei den Polyetherdiolen der Struktur HO(SO)_{w},(BO)ₓ'(PO)_{y},(EO)_{z},-X-(EO)_{z},(PO)_{y'}-(BO)_{x'}(SO)_{w}'-H, ist die Summe der Ethylenoxidgruppierungen z' 1 bis 49, vorzugsweise 10 bis 40,
der Styrenoxidmonomere w' b 0 bis 5, vorzugsweise 1,
der Butylenoxidmonomere x' 0 bis 5, vorzugsweise 1,
der Propylenoxidmonomere y' 0 bis 10, vorzugsweise 3.

Diese Indices stellen gleichsam wiederum statistische Mittelwerte dar, die Anlagerung der verschiedenen Alkylenoxidmonomere kann statistisch oder wiederum blockweise erfolgen. Der Rest X ist der Rest -CₙH₂ₙ- oder -C₆H₄- eines aromatischen, araliphatischen oder aliphatischen Diols HO-X-OH, vorzugsweise Ethylenglycol, Propylenglycol, Butandiol, Cyclohexandimethanol, Dihydroxybenzol, Dihydroxydiphenylmethan.

(C)(b): Bei den Polyetherpolydimethylsiloxandiolen der Struktur
H(SO)_{w},-(BO)ₓ,-(PO)_{y},-(EO)_{z},-Z-PDMS-Z-(EO)_{z},(PO)_{y},(BO)ₓ,(SO)_{w},-H, ist die Summe
der Ethylenoxidgruppierungen z' 0 bis 49, vorzugsweise 5 bis 30,
der Styrenoxidmonomere w' 0 bis 5, vorzugsweise 1,
der Butylenoxidmonomere x' 0 bis 5, vorzugsweise 1,
der Propylenoxidmonomere y' 0 bis 30, vorzugsweise 3 bis 15.
Die Anzahl der Dimethylsiloxy-Einheiten in der Kette der Polyethersiloxandiole (C)(b) beträgt 2 bis 100, bevorzugt 10 bis 60. Es ist auch möglich, die Dimethylsiloxy-Einheiten durch Phenylmethylsiloxy-Einheiten ganz oder teilweise auszutauschen. Die Struktureinheit Z richtet sich nach der Art des zur Polyether-Synthese verwendeten Alkohols. Bevorzugt verwendet werden die Alkohole Allylalkohol, Butenol oder Hexenol oder auch die Monovinylether von Diolen.

(C)(c): Die Polyesterpolydimethylsiloxandiole der Struktur H- (OC₅H₁₀CO-)_{y'}-Z-PDMS-Z-(CO-C₅H₁₀O-)_{y'}-H können ganz oder auch teilweise die Polyethersiloxandiole (C)(b) ersetzen.
Die Wahl richtet sich nach dem Anwendungszweck der herzustellenden Verdickungsmittel. Der Index y', der die Anzahl der Polyestergruppen repräsentiert, beträgt 1 bis 10 vorzugsweise 6. Die Struktureinheit Z richtet sich nach der Art des zur Hydrosilylierung verwendeten Alkohols. Bevorzugt verwendet werden die Alkohole Allylalkohol, Butenol oder Hexenol oder auch die Monovinylether von Diolen.

(C)(d): In den mitverwenbaren Polydimethylsiloxandiolen der Struktur H-Z-PDMS-Z-H beträgt die Anzahl der Dimethylsiloxy-Einheiten in der Kette 2 bis 100, bevorzugt 10 bis 60. Es ist auch möglich, die Dimethylsiloxy-Einheiten durch Phenylmethylsiloxy-Einheiten ganz oder teilweise auszutauschen. Die Struktureinheit Z ist abhängig von der Art des zur Hydrosilylierung verwendeten Alkohols. Bevorzugt verwendet werden die Alkohole Allylalkohol, Butenol oder Hexenol oder auch die Monovinylether von Diolen.

(C)(e): Die Anzahl der Dimethylsiloxy-Einheiten in der Kette der Polydimethylsiloxandiamine der Struktur R'NH-Y-PDMS-Y-HNR' beträgt 2 bis 100, bevorzugt 10 bis 60.

Es ist auch möglich, die Dimethylsiloxy-Einheiten durch Phenylmethylsiloxy-Einheiten ganz oder teilweise auszutauschen. Bei Verwendung eines Aminosiloxans besteht die Struktureinheit Y aus dem Rest des zur Hydrosilylierung verwendeten ungesättigten Amins. Besonders bevorzugte Amine sind Allylamin, Methallylamin oder N-Methylallylamin.

(C)(f): Schließlich können Polyetherdiamine der allgemeinen Struktur R'NH-(PO)_{y},(EO)_{z},-X-(EO)_{z},(PO)_{y},-NHR mitverwendet werden. Der Wert z', der die Anzahl der Ethylenoxideinheiten repräsentiert, beträgt 1 bis 49, bevorzugt 2; Der Wert y', der die Anzahl der Propylenoxideinheiten repräsentiert, beträgt 0 bis 10, bevorzugt 3. Der Rest X ist der Rest eines aromatischen, araliphatischen oder aliphatischen Diols HO-X-OH, vorzugsweise werden die Diole Ethylenglycol, Propylenglycol, Butandiol, Cyclohexandimethanol, Dihydroxybenzol oder Dihydroxydiphenylmethan verwendet.

Die genannten Indices stellen statistische Mittelwerte dar, die Kettenlängenverteilung richtet sich nach der Art der gewählten Herstellmethode. Dies ist dem Fachmann geläufig und nicht Gegenstand der Anmeldung.

Als eigenständiges Polymer sind Polyurethanwirkstoffe nach b) als Verdickungsmittel an sich unbrauchbar, da sie unlöslich und somit nicht homogen verteilbar sind. Umgekehrt wäre gerade die Eigenschaft der Unlöslichkeit ein für Farben und Lacke wesentliches und positives Kriterium um Wasser- und Scheuerbeständigkeit und damit die Lebensdauer der Beschichtung zu erhöhen.

Überraschenderweise wurde gefunden, dass die erfindungsgemäßen Polyurethangemische aus a) und b) in jedem Verhältnis miteinander mischbar sind und weder zusätzliche Emulgatoren und/oder Lösemittel benötigt werden. Gleichzeitig lösen sie sich über einen großen Konzentrationsbereich homogen in Wasser.

Die erfindungsgemäßen Polyurethane aus a) und b) werden gemeinsam geschmolzen und nach den üblichen und gebräuchlichen Verfahren pulverisiert oder granuliert.

Ein weiterer Gegenstand der Erfindung ist die Verwendung der festen Polyurethanverdicker zur Einstellung der rheologischen Eigenschaften wässriger Systeme, wie in wässrigen pharmazeutischen, kosmetischen Formulierungen, Pflanzenschutzformulierungen, Füllstoff- und Pigmentpasten, Zubereitungen von Waschmittel, Klebstoffen, Wachsen und Polituren sowie für die Erdölförderung, bevorzugt in Anstrichmitteln und Beschichtungen.

Weiter wird vermerkt, dass sich die festen Polyurethanwirkstoffe, bestehend aus Substanzen des Typs a) und Substanzen des Typs b) selbstverständlich auch mit Emulgatoren und/oder Lösemitteln kombinieren lassen. Auch auf diese Weise kann der Anteil an wasserlöslichen Verbindungen innerhalb der aufgetragenen Beschichtung reduziert und die lacktechnischen Eigenschaften verbessert werden.

Die Beispielverbindungen werden nach an sich bekannten Verfahren hergestellt.

### Beispiel 1:

Ein in Wasser löslicher Polyurethanverdickerwirkstoff nach (a) ist wie folgt zu präparieren:

180 g eines Polyethylenglykols mit dem Molekulargewicht von 6.000 (0,03 mol) werden in den trockenen Reaktor unter N₂ vorgelegt.

Zur Entwässerung des Polyethers wird das Produkt im Reaktionsbehälter auf 110°C aufgeheizt und unter Vakuum (< 15 mm) und einem leichten Stickstoffstrom 1 h lang entwässert, der Wassergehalt (nach Karl Fischer) soll < 0,03 % betragen. Bei höherem Wassergehalt wird die Zeit zur Entwässerung entsprechend verlängert. Nach erfolgter Trocknung lässt man den Ansatz auf 80 °C abkühlen.
Nun werden 4,66 g Vestanat^{®} IPDI (Isophorondiisocyanat) d.h., mit einem NCO-Index von 1,05 und 5,9 g Stearylisocyanat zu der flüssigen Reaktionsmischung gegeben.

Zunächst werden die Isocyanate mit den OH-funktionellen Komponenten innig vermischt.
Dann erfolgt die Zugabe von 4 g Dibutylzinndilaurat; dabei ist eine leichte exotherme Reaktion zu erkennen, der Temperaturanstieg beträgt ca. 10 °C. Die Reaktionsmischung ist noch sehr flüssig.

Nach 6 Std. erfolgt eine Reaktionskontrolle über die Bestimmung des NCO-Gehaltes. Bei einem NCO-Wert von < 0,01 % ist die Reaktion weitestgehend abgeschlossen.
Man erhält eine bei Raumtemperatur hell gelbe, leicht zerbrechliche wachsartige Substanz.

### Beispiel 2:

Ein in Wasser unlöslicher Polyurethanverdickerwirkstoff nach (b) ist wie folgt zu präparieren:

93 Val-% eines Stearylalkohol gestarteten Polyethers, alkoxyliert mit 100 mol EO (MG lt. OHZ 4.500 g/mol), 4 Val-% eines Propylenglykol gestarteten Polyethers, alkoxyliert mit 5 mol EO und 3 mol SO (MG lt. OHZ 610 g/mol) und 3 Val-% des Polysiloxandiols "Tegomer^{®} HSi-2111" mit dem Molekulargewicht 810 g/mol werden in einem trockenen Reaktor unter N₂ vorgelegt.
Zur Entwässerung der Mischung werden die Produkte im Reaktionsbehälter auf 110 °C aufgeheizt und unter Vakuum (< 15 mm) und einem leichten Stickstoffstrom bis zu einem Wassergehalt (nach Karl Fischer) < 0,03 % entwässert. Nach erfolgter Trocknung lässt man den Ansatz auf 80 °C abkühlen.

Nun werden 600 g Desmodur^{®} N, entsprechend 1,05 mol, d.h., mit einem NCO-Index von 1,05 zu der flüssigen Reaktionsmischung gegeben.

Zunächst wird das Desmodur^{®} N innig mit den OH-funktionellen Komponenten vermischt.

Dann erfolgt die Zugabe von 5 g Dibutylzinndilaurat; dabei ist eine leichte exotherme Reaktion zu erkennen, der Temperaturanstieg beträgt ca. 10 °C. Die Viskosität steigt im Laufe der Zeit merklich an.

Nach 6 Std. erfolgt eine Reaktionskontrolle über die Bestimmung des NCO-Gehaltes. Bei einem NCO-Wert von < 0,01 % ist die Reaktion weitestgehend abeschlossen.

Man erhält eine bei Raumtemperatur hell gelbe, leicht zerbrechliche wachsartige Substanz.

### Beispiel 3:

Für die nach Beispiel 1 und 2 gefertigten PUR-Wirkstoffe wurde die Löslichkeit in Wasser bestimmt:
Löslichkeit des Produkts nach a) Beispiel 1 in Wasser bei 20 °C unbegrenzt
Löslichkeit des Produkts nach b) Beispiel 2 in Wasser bei 20 °C < 3 g/l.

### Beispiel 4:

Es wurden die Schmelzpunkte für den nach Beispiel 1 gefertigten PUR-Wirkstoff, sowie den nach Beispiel 2 gefertigten PUR-Wirkstoff und deren Abmischungen bestimmt. (Schmelzpunktbestimmung nach Kofler)

| | |
|---|---|
| 4.1. | 100 % Produkt nach Beispiel 1, 57 °C. (Vergleichsbeispiel) |
| 4.2. | 75 % Produkt nach Beispiel 1 + 25 % Produkt nach Beispiel 2, 47 °C. |
| 4.3. | 50 % Produkt nach Beispiel 1 + 50 % Produkt nach Beispiel 2, 48 °C. |
| 4.4. | 25 % Produkt nach Beispiel 1 + 75 % Produkt nach Beispiel 2, 49 °C. |
| 4.5. | 100 % Produkt nach Beispiel 2, 50 °C. (Vergleichsbeispiel) |

### Beispiel 5:

Aus den Produkten nach den Beispielen 4.1. (entsprechend Beispiel 1), 4.2., 4.3., 4.4., 4.5. wurden wässrige Lösungen hergestellt.

Dazu werden die erfindungsgemäßen Produkte durch Vermahlen mit einer Labormühle auf eine Körnung von 0,2 bis 1 mm gebracht und unter Rühren am Dissolver bei 1.500 U/min in Wasser eingebracht.

Innerhalb von 10 Minuten sind die Produkte gelöst.

Nach einer Lagerzeit von 24 Stunden bei Raumtemperatur resultieren die in Tabelle 1 mit dem Haake-Viskotester L7 bei 10 U/min gemessenen viskositäten:

**Tabelle 1:**

| Versuch | Produkt nach | Konzentration in | Viskosität |
|---|---|---|---|
| | Beispiel | Wasser | [m Pas] |
| | | [%] | (1 U/min) |
| 5.1. | 4.1. | 6 | 19800 |
| 5.2. | 4.2. | 6 | 41000 |
| 5.3. | 4.3. | 6 | 44500 |
| 5.4. | 4.4. | 6 | 19500 |
| 5.5. | 4.5. | 6 | inhomogen, unlöslich |
| 5.6. | 4.1. | 3 | 8900 |
| 5.7. | 4.2. | 3 | 7800 |
| 5.8. | 4.3. | 3 | 6150 |
| 5.9. | 4.4. | 3 | inhomogen, unlöslich |
| 5.10. | 4.5. | 3 | inhomogen, unlöslich |

### Beispiel 6:

Die in Wasser gelösten PUR-Produkte nach Beispiel 5.6.; 5.7.; 5.8.; 5.9. werden in einer Acrylatdispersion¹⁾ der folgenden Zusammensetzung eingebracht:
In einem 200 ml-Rührgefäß werden auf 100 g die folgenden Bestandteile entsprechend Tabelle 2 gefertigt. Dazu wurden die Produkte gefertigt nach Beispiel 5 mit der Acrylatdispersion homogen vermischt. Nach 24 Stunden wurde mit dem Haake-Viskosimeter L7 die resultierende Viskosität bestimmt.

**Tabelle 2:**

| Versuch | PUR- Zusammen- setzung | Zusammensetzung der Acrylat-dispersion | PUR-Menge (absolut bezogen auf Dispersion Lff.) | Viskosität [mPas] | |
|---|---|---|---|---|---|
| | | | | 1 U/min | 10 U/min |
| 8.0. | -ohne- | 100 % Dilexo RA3 | 0 | | |
| 8.1. | 4.1. | 99 % Dilexo RA3 + 1 % 5.6. | 0,0003 | 58710 | 20570 |
| 8.2. | 4.2. | 99 % Dilexo RA3 + 1 % 5.7. | 0,0003 | 67510 | 25060 |
| 8.3. | 4.3. | 99 % Dilexo RA3 + 1 % 5.8. | 0,0003 | 84550 | 33180 |
| 8.4. | 4.1. | 98 % Dilexo RA3 + 2 % 5.6. | 0,0006 | 86480 | 29320 |
| 8.5. | 4.2. | 98 % Dilexo RA3 + 2 % 5.7. | 0,0006 | 151090 | 40460 |
| 8.6. | 4.3. | 98 % Dilexo RA3 + 2 % 5.8. | 0,0006 | 189630 | 55650 |

| | | | | | |
|---|---|---|---|---|---|
| ¹⁾ Dilexo RA3^{®} ist eine Dispersion auf der Basis eines Reinacrylates der Firma NESTE Chemicals GmbH, Kunstharze Meerbeck, Roemer Straße 733, D-47443 Moers. | | | | | |

### Beispiel 7:

Der PUR-Feststoff nach Beispiel 4.3. sowie das in Wasser gelöste PUR-Produkt nach Beispiel 5.6. werden in einem Dispersionslack der in Tabelle 3 vorliegenden Zusammensetzung auf Wirksamkeit geprüft.

**Tabelle 3:**

| Produkt | | 7.1. | 7.2. | 7.3. | 7.4. | 7.5 |
|---|---|---|---|---|---|---|
| | | [g] | [g] | [g] | [g] | [g] |
| AMP(Aminopropanol)¹⁾ | (1) | 2,50 | 2,50 | 2,50 | 2,50 | 2,50 |
| Tego PE 4648²⁾ | (2) | 5,50 | 5,50 | 5,50 | 5,50 | 5,50 |
| Tego Foamex 855³⁾ | (3) | 1,00 | 1,00 | 1,00 | 1,00 | 1,00 |
| Verdicker gemäß 4.3. | (4) | 10,00 | 5,00 | 2,50 | 1,25 | |
| Verdicker gemäß 5.3. | (4) | | | | | 41,70 |
| TiO₂-RHD-2⁴⁾ | (5) | 225,00 | 225,00 | 225,00 | 225,00 | 225,00 |
| Methoxybutanol | (6) | 17,00 | 17,00 | 17,00 | 17,00 | 17,00 |
| Propylenglykol | (7) | 17,00 | 17,00 | 17,00 | 17,00 | 17,00 |
| Butyldiglykol | (8) | 17,00 | 17,00 | 17,00 | 17,00 | 17,00 |
| Wasser | (9) | 49,00 | 44,00 | 39,00 | 35,00 | |
| Wasser | (10) | 116,00 | 126,00 | 133,50 | 138,75 | 132,30 |
| Neocryl XK 61 (42 %)⁵⁾ | (11) | 540,00 | 540,00 | 540,00 | 540,00 | 540,00 |
| Summe | | 1.000,00 | 1.000,00 | 1.000,00 | 1.000,00 | 1.000,00 |

| | | | | | | |
|---|---|---|---|---|---|---|
| ¹⁾ (2-Amino-2-methylpropanol-1, 90 %ig in Wasser), Angus Chemie GmbH, Essen ²⁾ Netzmittel, Tego Chemie Servive, Essen ³⁾ Entschäumer, Tego Chemie Service, Essen ⁴⁾ Pigment, Tioxide ⁵⁾ Acrylatdispersion, ICI-Resin, Waalwijk | | | | | | |

Die Produkte 1 bis 9 werden im Dissolver bei 1.500 U/min mit 200 g Glasperlen (Ø 3 mm) 30 Minuten dispergiert. Anschließend erfolgt die zügige und kontinuierliche Zugabe der Komponenten 10 und 11. Man homogenisiert die Formulierung jeweils noch 3 Minuten.

Nach 24 Stunden wurde mit dem Haake-Viskosimeter L7 die resultierende Viskosität bestimmt. Das Ergebnis ist in Tabelle 3 genannt:

**Tabelle 4:**

| U/min | 7.1 | 7.2 | 7.3 | 7.4 | 7.5 |
|---|---|---|---|---|---|
| 5 | 43750 | 28350 | 18650 | 1450 | 18650 |
| 10 | 36450 | 24900 | 17050 | 1230 | 17050 |
| 20 | 32380 | 22250 | 15900 | 1215 | 15900 |

Eine zur Nutzung übliche Viskosität liegt in einer Größenordnung von ca. 5.000 mPas bei 10 U/min, bewegt sich somit in einer Dosierung von 0,125 bis 0,25 % PUR-Wirkstoff. Die erforderliche Zusatzmenge bekannter PUR-Wirkstoffe liegen um den Faktor 4 bis 8 höher.

### Beispiel 8:

Der PUR-Feststoff nach Beispiel 4.3 wurde in einem Dispersionslack der in Tabelle 5 vorliegenden Zusammensetzung auf seine Wirksamkeit geprüft.

In einem 1.000 ml-Rührgefäß werden zusammen die folgenden Bestandteile eingebracht:
Die Produkte 1 bis 11 werden im Dissolver bei 1.500 U/min 30 Minuten dispergiert. Anschließend erfolgt die zügige und kontinuierliche Zugabe der Komponenten 12 bis 14. Anschließend wird der Lack weitere 5 Minuten homogenisiert.

**Tabelle 5:**

| Rohstoffe | | 8.1. | 8.2. | 8.3. | 8.4. |
|---|---|---|---|---|---|
| | | [g] | [g] | [g] | [g] |
| 1,2-Propylenglykol | (1) | 20,00 | 20,00 | 20,00 | 20,00 |
| Butyldiglycol | (2) | 20,00 | 20,00 | 20,00 | 20,00 |
| Methoxybutanol | (3) | 20,00 | 20,00 | 20,00 | 20,00 |
| Wasser | (4) | 115,00 | 115,00 | 115,00 | 115,00 |
| Verdicker gemäß 4.3 | (5) | 2,00 | - | - | - |
| Coatex BR 910 G¹) | (5) | - | 2,00 | - | - |
| Rheolate 205²⁾ | (5) | - | - | 2,00 | - |
| Rheolate 208³⁾ | (5) | - | - | - | 2,00 |
| Tego^{®} Dispers 715 W⁴⁾ | (6) | 6,00 | 6,00 | 6,00 | 6,00 |
| Tego^{®} Wet 500⁴⁾ | (7) | 4,00 | 4,00 | 4,00 | 4,00 |
| Acticide RS | (8) | 3,00 | 3,00 | 3,00 | 3,00 |
| Natronlauge (15 %ig) | (9) | 2,00 | 2,00 | 2,00 | 2,00 |
| Tego^{®} Foamex 8030⁴⁾ | (10) | 3,00 | 3,00 | 3,00 | 3,00 |
| Kronos 2190 | (11) | 220,00 | 220,00 | 220,00 | 220,00 |
| Dilexo RA 3 | (12) | 552,00 | 552,00 | 552,00 | 552,00 |
| Tego^{®} Foamex 8030⁴⁾ | (13) | 3,00 | 3,00 | 3,00 | 3,00 |
| Südranol 230⁵⁾ | (14) | 30,00 | 30,00 | 30,00 | 30,00 |
| Summe | | 1.000,00 | 1.000,00 | 1.000,00 | 1.000,00 |

| | | | | | |
|---|---|---|---|---|---|
| ¹⁾ Coatex BR 910 G (Dimed/Coatex, Köln) ²⁾ Rheolate 205 (Elementis, Leverkusen) ³⁾ Rheolate 208 (Elementis, Leverkusen) ⁴⁾ Tego Dispers, Wet, Foamex (Tego Chemie Service GmbH, Essen) ⁵⁾ Südranol 230 (Süddeutsche Emulsions Chemie, Mannheim) | | | | | |

Nach einer Reifezeit von ca. 24 Std. können die anwendungstechnischen Prüfungen durchgeführt werden. Hierzu wurde die Viskosität der Proben mit Hilfe eines Haake Rheometers (RS 1) ermittelt.

**Tabelle 6:**

| Viskosität | 8.1 | 8.2 | 8.3 | 8.4 |
|---|---|---|---|---|
| D = 10,3 s⁻¹ | 2.220 | | 1.200 | 1.180 |
| D = 100 s⁻¹ | 1.290 | | 680 | 630 |
| D = 600 s⁻¹ | 595 | | 420 | 403 |

## Patentansprüche

1. Pulverförmige Verdickungsmittelzubereitung, enthaltend
a) mindestens einen in Wasser löslichen Polyurethanverdickerwirkstoff, wobei die Wasserlöslichkeit der Polyurethanverdickerwirkstoffe gemäß a) > 10 g/l ist, und
b) mindestens einen in Wasser unlöslichen bzw. wenig löslichen Polyurethanverdickerwirkstoff, wobei die Wasserlöslichkeit der Polyurethanverdickerwirkstoffe gemäß b) < 10 g/l ist.

2. Pulverförmige Verdickungsmittelzubereitung gemäß Anspruch 1, enthaltend 80 bis 10 Gew.-% an a) und 20 bis 90 Ges.-% an b).

3. Pulverförmige Verdickungsmittelzubereitung gemäß mindestens einem der Ansprüche 1 bis 2, **dadurch gekennzeichnet, dass** die Polyurethanverdickerwirkstoffe gemäß a) hydrophile Segmente in einer Menge von mindestens 50 Gew.-% enthalten.

4. Pulverförmige Verdickungsmittelzubereitung gemäß mindestens einem der Ansprüche 1 bis 3, **dadurch gekennzeichnet, dass** die Polyurethanverdickerwirkstoffe gemäß a) als hydrophile Segmente hochmolekulare Polyetherketten enthalten.

5. Pulverförmige Verdickungsmittelzubereitung gemäß Anspruch 1, **dadurch gekennzeichnet, dass** die Polyurethanverdickerwirkstoffe gemäß b) als hydrophobe Segmente Kohlenwasserstoffketten mit mindestens 6 Kohlenstoffatomen enthalten.

6. Pulverförmige Verdickungsmittelzubereitung gemäß Anspruch 1, **dadurch gekennzeichnet, dass** als Polyurethanverdickerwirkstoffe gemäß b) Verbindungen verwendet werden, die nach an sich bekannten Verfahren herstellbar sind, aus
(A) mindestens trifunktionellen aliphatischen und/oder aromatischen Isocyanatoligomerisaten mit
(B) 90,0 bis 99,8 val-% eines oder mehreren Polyethern der Struktur RO(SO)_{w}(BO)ₓ(PO)_{y}(EO)_{z}-H und
(c) 0,2 bis 10,0 val-% mindestens einer der Verbindungen ausgewählt aus der Gruppe
(a) Polyethern der Struktur
HO(SO)_{w'}(BO)_{x'}(PO)_{y'}EO)_{z'}-H
(b) Polyetherpolydimethylsiloxandiole der Struktur H(SO)_{w'}(BO)_{x'}(PO)_{y'} (EO)_{z'}-Z-PDMS-Z(EO)_{z'} (PO)_{y'} (BO) _{x'} (SO) _{w'} - H
(c) Polyesterpolydimethylsiloxandiole der Struktur H- (QC₅H₁₀CO-) _{y'}-Z-PDMS-Z- (CO-C₅H₁₀O-) _{y'}-H
(d) Polydimethylsiloxandiolen der Struktur H-Z-PDMS-Z-H
(e) Polydimethylsiloxandiaminen der Struktur R'NH-Y-PDMS-Y-HNR'
(f) Polyetherdiaminen der Struktur R 'HN- (PO)_{y'} (EO) _{z'}-X- (EO) _{z'(}PO)_{y'}-NHR'
worin bedeuten,
R ein gegebenenfalls substituierter oder funktionalisierter Kohlenwasserstoffrest mit 1 bis 50 Kohlenstoffatomen,
R' ein gegebenenfalls substituierter oder funktionaliserter Kohlenwasserstoffrest mit 1 bis 8 Kohlenstoffatomen,
SO divalenter Rest des Styrenoxids,
BO divalenter Rest des Butylenoxids,
PO divalenter Rest des Propylenoxids,
EO divalenter Rest des Ethylenoxids,
PDMS divalenter Rest des Polydimethylsiloxans,
w 0 bis 5,
x 0 bis 5,
y 0 bis 20,
z 50 bis 200,
w' 0 bis 5,
x' 0 bis 5,
y' 0 bis 10,
z' 1 bis 49,
Z -CₙH₂ₙO- oder -CH₂-CH₂-O-CₙH₂ₙO-, mit n = 2 bis 12,
X -CₙH₂ₙ- oder -C₆H₄-, mit n = 2 bis 12,
Y -CₘH₂m,
mit m = 1 bis 8.

7. Verwendung der pulverförmigen Verdickungsmittelzubereitung gemäß mindestens einem der Ansprüche 1 bis 6 als rheologische Additive zur Verdickung wässriger Systeme.

8. Verwendung der pulverförmigen Verdickungsmittelzubereitung gemäß Anspruch 7 zur Verdickung wässriger Farben und Lacke.

## Claims

1. Pulverulent thickener preparation comprising
a) at least one water-soluble active polyurethane thickener substance the water solubility of the active polyurethane thickener substances a) being > 10 g/l, and
b) at least one water-insoluble or sparingly water-soluble active polyurethane thickener substance, the water solubility of the active polyurethane thickener substances b) being < 10 g/l.

2. Pulverulent thickener preparation according to claim 1, containing 80% to 10% by weight of a) and 20% to 90% by weight of b).

3. Pulverulent thickener preparation according to at least one of claims 1 to 2, **characterized in that** the active polyurethane thickener substances a) contain hydrophilic segments in an amount of at least 50% by weight.

4. Pulverulent thickener preparation according to at least one of claims 1 to 3, **characterized in that** the active polyurethane thickener substances a) contain high molecular mass polyether chains as hydrophilic segments.

5. Pulverulent thickener preparation according to claim 1, **characterized in that** the active polyurethane thickener substances b) contain hydrocarbon chains having at least 6 carbon atoms as hydrophobic segments.

6. Pulverulent thickener preparation according to cliam 1, **characterized in that** use is made as active polyurethane thickener substances b) of compounds which are preparable by processes that are known per se, from
(A) at least trifunctional aliphatic and/or aromatic isocyanate oligomers with
(B) 90.0 to 99.8 eq-% of one or more polyethers of the structure RO(SO)_{w}(BO)ₓ(PO)_{y}(EO)_{z}-H and
(C) 0.2 to 10.0 eq-% of at least one of the compounds selected from the group of
(a) polyethers of structure
HO(SQ)_{w'} (BQ)_{x'} (PQ)_{y'} (EQ)_{z'}-H
(b) polyetherpolydimethylsiloxanediols of structure
HO(SO)_{w'} (BO)_{x'} (PO)_{y'} (EO)_{z'}-Z-PDMS-Z (EO) _{z'} (PO)_{y'} (BO)_{x'} (SO)_{w'}-H
(c) polyesterpolydimethylsiloxanediols of structure
H- (OC₅H₁₀CO-) _{y'} -Z-PDMS-Z- (CO-C₅H₁₀O-)_{y'}-H
(d) polydimethylsiloxanediols of structure H-Z-PDMS-Z-H
(e) polydimethylsiloxanediamines of structure R'NH-Y-PDMS-Y-HNR'
(f) polyetherdiamines of structure
R'HN-(PO)_{y'}(EO)_{z'}-X-(EO)_{z'}(PQ)_{y'}-NHR'
in which
R is an optionally substituted or functionalized hydrocarbon radical having 1 to 50 carbon atoms,
R' is an optionally substituted or functionalized hydrocarbon radical having 1 to 8 carbon atoms,
SO is a divalent radical of styrene oxide,
BO is a divalent radical of butylene oxide,
PO is a divalent radical of propylene oxide,
EO is a divalent radical of ethylene oxide,
PDMS is a divalent radical of polydimethylsiloxane,
w is 0 to 5,
x is 0 to 5,
y is 0 to 20,
z is 50 to 200,
w' is 0 to 5,
x' is 0 to 5,
y' is 0 to 10,
z' is 1 to 49,
Z is -CₙH₂ₙO- or -CH₂-CH₂-O-CₙH₂ₙO-,
with n = 2 to 12,
X is -CₙH₂ₙ- or -C₆H₄-,
with n = 2 to 12,
Y is -CₘH₂ₘ,
with m = 1 to 8.

7. Use of the pulverulent thickener preparation according to at least one of claims 1 to 6 as rheological additives for thickening aqueous systems.

8. Use of the pulverulent thickener preparation according to claim 7 for thickening aqueous inks, paints, and varnishes.

## Revendications

1. Préparation d'épaississant pulvérulente, contenant
a) au moins une substance active épaississante polyuréthanne soluble dans l'eau, la solubilité dans l'eau des substances actives épaississantes polyuréthanne selon a) étant > 10 g/l, et
b) au moins une substance active épaississante polyuréthanne insoluble ou peu soluble dans l'eau, la solubilité dans l'eau des substances actives épaississantes polyuréthanne selon b) étant < 10 g/l.

2. Préparation d'épaississant pulvérulente selon la revendication 1, contenant de 80 à 10 % en poids de a) et de 20 à 90 % en poids de b).

3. Préparation d'épaississant pulvérulente selon au moins l'une des revendications 1 et 2, **caractérisée en ce que** les substances actives épaississantes polyuréthanne selon a) contiennent des segments hydrophiles en une quantité d'au moins 50 % en poids.

4. Préparation d'épaississant pulvérulente selon au moins l'une des revendications 1 à 3, **caractérisée en ce que** les substances actives épaississantes polyuréthanne selon a) contiennent en tant que segments hydrophiles des chaînes polyéther de masse moléculaire élevée.

5. Préparation d'épaississant pulvérulente selon la revendication 1, **caractérisée en ce que** les substances actives épaississantes polyuréthanne selon b) contiennent en tant que segments hydrophobes des chaînes hydrocarbonées ayant au moins 6 atomes de carbone.

6. Préparation d'épaississant pulvérulente selon la revendication 1, **caractérisée en ce qu'**on utilise en tant que substances actives épaississantes polyuréthanne selon b) des composés qui peuvent être préparés, selon des procédés connus en soi, à partir
(A) d'oligomères d'isocyanates aliphatiques et/ou aromatiques au moins trifonctionnels avec
(B) de 90,0 à 99,8 % en val d'un ou plusieurs polyéthers de structure
RO(SO)_{w}(BO)ₓ(PO)_{y}(EO)_{z}-H et
(c) de 0,2 à 10,0 % en val d'au moins l'un des composés choisis dans l'ensemble constitué par
(a) des polyéthers de structure
HO(SO)_{w'} (BO)_{x'} (PO)_{y'} (EO)_{z'}-H
(b) des polyétherpolydiméthylsiloxanediols de structure
H(SO)_{w'} (BO)_{x'} (PO)_{y'} (EQ) _{z'} - Z - PDMS-Z (EO) _{z'} (PO)_{y'} (BO)_{x'} (SO)_{w'}-H
(c) des polyesterpolydiméthylsiloxanediols de structure
(H)-(OC₅H₁₀CO-)_{y'}-Z-PDMS-Z-(CO-C₅H₁₀O-)_{y'}-H
(d) des polydiméthylsiloxanediols de structure
H-Z-PDMS-Z-H
(e) des polydiméthylsiloxanediamines de structure
R'NH-Y-PDMS-Y-HNR'
(f) des polyétherdiamines de structure
R'HN-(PQ)_{y'}(EQ)_{z'}-X-(EO)_{z'}-(PO)_{y'}-NHR'
dans lesquels
R représente un radical hydrocarboné éventuellement substitué ou fonctionnalisé, ayant de 1 à 50 atomes de carbone,
R' représente un radical hydrocarboné éventuellement substitué ou fonctionnalisé, ayant de 1 à 8 atomes de carbone,
SO représente le reste divalent de l'oxyde de styrène,
BO représente le reste divalent de l'oxyde de butylène,
PO représente le reste divalent de l'oxyde de propylène,
EO représente le reste divalent de l'oxyde d'éthylène,
PDMS représente le reste divalent du polydiméthylsiloxane,
w va de 0 à 5,
x va de 0 à 5,
y va de 0 à 20,
z va de 50 à 200,
w' va de 0 à 5,
x' va de 0 à 5,
y' va de 0 à 10,
z' va de 1 à 49,
Z représente -CₙH₂ₙO- ou -CH₂-CH₂-O-C₂H₂ₙO-,
où n = 2 à 12,
X représente -CₙH₂ₙ- ou -C₆H₄-, où n = 2 à 12,
Y représente -CₘH₂ₘ,
où m = 1 à 8.

7. Utilisation de la préparation d'épaississant pulvérulente selon au moins l'une des revendications 1 à 6, en tant qu'additifs rhéologiques pour l'épaississement de systèmes aqueux.

8. Utilisation de la préparation d'épaississant pulvérulente selon la revendication 7, pour l'épaississement de couleurs et peintures à l'eau.
